# EUROPÄISCHE PATENTSCHRIFT

(11) **EP 2 212 167 B1**
(45) Veröffentlichungstag und Bekanntmachung des Hinweises auf die Patenterteilung: **13.07.2011**
(21) Anmeldenummer: 08804440.9
(22) Anmeldetag: 19.09.2008
(51) Int. Cl.: B60T 8/40, F04B 1/04

(54) **HYDRAULISCHE KOLBENPUMPE**
HYDRAULIC PISTON PUMP
POMPE À PISTON HYDRAULIQUE

(30) Priorität: 12.10.2007 DE 102007049152
(43) Veröffentlichungstag der Anmeldung: 04.08.2010
(73) Patentinhaber: Robert Bosch GmbH, 70442 Stuttgart (DE)
(72) Erfinder: SCHULLER, Wolfgang, 74389 Cleebronn (DE); REINER, Juergen, 88167 Gestratz (DE)
(86) Internationale Anmeldenummer: PCT/EP2008/062506
(87) Internationale Veröffentlichungsnummer: WO 2009/049987

(56) Entgegenhaltungen:
- WO-A-01/70550
- WO-A-99/06705
- WO-A-99/06707
- DE-A1- 19 928 913

## Beschreibung

### Stand der Technik

Die Erfindung geht aus von einer hydraulischen Kolbenpumpe, insbesondere für eine elektronisch schlupfregelbare Fahrzeugbremsanlage entsprechend den gattungsbildenden Merkmalen des Anspruchs 1.

Elektronisch schlupfregelbare Fahrzeugbremsanlagen sind auch als ABS-/ASR-/ESP-Bremsanlagen bekannt. Diese Bremsanlagen weisen zur Regelung des Bremsdrucks an den einzelnen Radbremsen in Abhängigkeit eines eventuell auftretenden Radschlupfs ein von einem elektronischen Steuergerät ansteuerbares Hydroaggregat auf. Dieses Hydroaggregat umfasst einen metallischen Gehäuseblock mit daran befestigten Hydraulikkomponenten. Die der Erfindung zugrundeliegenden Kolbenpumpen bilden einen wesentlichen Bestandteil dieser Hydraulikkomponenten. Sie werden zur Förderung von Druckmittel innerhalb des Hydrauliksystems einer Fahrzeugbremsanlage benötigt.

Aus der DE 199 28 913 A1 ist eine Kolbenpumpe entsprechend den gattungsbildenden Merkmalen des Anspruchs 1 bereits bekannt. Diese bekannte Kolbenpumpe besteht aus einem Kolben, einer als Zylinder ausgebildeten Kolbenlaufbuchse, Einlass- und Auslassventilen und Dichtelementen. Die Ventile steuern die Durchflussrichtung von Druckmittel durch die Kolbenpumpe. Hierbei dient das Einlassventil dazu, das Druckmittel während eines Arbeitshubs des Kolbens nicht zur Ansaugseite zurückströmen zu lassen, während das Auslassventil verhindert, dass eine Rückströmung des geförderten Druckmittels in den Pumpeninnenraum erfolgt. Typischerweise sind die Ventile als federbelastete Kugelventile ausgebildet. Ein Abströmkanal der Kolbenpumpe ist zwischen einem Verschlussstopfen und dem Boden der Kolbenlaufbuchse ausgebildet.

Der Verschlussstopfen verschließt eine die Kolbenpumpe aufnehmende Bohrung gegenüber der Umgebung. Er ist entweder spanend oder umformtechnisch hergestellt, wobei sich unter wirtschaftlicher Betrachtung für große Stückzahlen das Umformen anbietet.

Über die Geometrie des Abströmkanals der Kolbenpumpe ist das Geräuschverhalten beeinflussbar. Üblicherweise umfasst der Abströmkanal deshalb eine geeignete Verjüngung um eine Drosselwirkung darzustellen. Durch diese Drosselwirkung wird ein hydraulischer Tiefpass erzeugt, welcher sich positiv auf das Geräusch auswirkt. Das Verhalten der kinematischen Viskosität der Bremsflüssigkeit im Bereich zwischen 0 °C und 120 °C kann als nahezu konstant angesehen werden und die optimale Drosselwirkung wird für diesen Temperaturbereich definiert.

Allerdings ändert sich die kinematische Viskosität des Druckmittels im Tieftemperaturbereich (-40 °C bis 0 °C) stark, was zu einem Druckanstieg im Inneren der Kolbenpumpe und damit zu einer erhöhten Belastung der druckbeaufschlagten Bauteile der Kolbenpumpen sowie des gesamten Antriebs der Kolbenpumpe führt. Auch Schmutzpartikel im Druckmittel können einen Druckmittelabfluss behindern und einen Druckanstieg verursachen.

Aus der WO 01/70550 A2 der WO 99/06705 A1 und der WO 99/06707 A1 sind hydraulische Kolbenpumpen bekannt, bei denen mehrere Abströmkanäle zur Druckmittelabführung vorgesehen sind. Diese Abströmkanäle sind sternförmig zueinander angeordnet, untereinander gleich gestaltet bzw. dimensioniert und hydraulisch parallel zueinander geschaltet. Ein die Druckmittelabführung steuernder Ventilschließkörper ist dadurch zwischen den Abströmkanälen frei beweglich angeordnet und nimmt in seiner Öffnungsstellung nicht näher bestimmbare Positionen ein. Diese kann das Betriebsgeräusch der Kolbenpumpen verschlechtern.

### Offenbarung der Erfindung

Eine Kolbenpumpe gemäß den Merkmalen des Anspruchs 1 hat demgegenüber den Vorteil, dass Drucküberhöhungen im Pumpeninnenraum und damit einhergehende Belastungen der druckbeaufschlagten Bauteile reduziert werden. Hierfür werden zusätzliche Mittel vorgeschlagen, die gemeinsam mit einem ersten Druckmittel abführenden Abströmkanal durchströmt werden, wobei die Durchströmung der vorgeschlagenen Mittel gegenüber der Durchströmung des ersten Abströmkanals in Abhängigkeit des Drucks im ersten Abströmkanal reduziert ist.

Damit nimmt ein die Druckmittelabführung steuernder Ventilschließkörper in geöffneter Stellung stets eine definierte Vorzugslage ein, was das Betriebsgeräusch der Kolbenpumpe verringert. Die vorgeschlagenen Mittel erfordern keine zusätzlichen Bauteile, da sie sich allein durch eine konstruktive Ausgestaltung der ohnehin vorhandenen Bauteile darstellen lassen. Diese geometrische Ausgestaltung der Mittel ist einsatzspezifisch variierbar und kann vorteilhafter Weise erst im Verlauf einer Montage der Bauteile festgelegt werden.

Aufgrund der erfindungsgemäß vorgesehenen Mittel reduziert sich die zum Antrieb der Kolbenpumpen erforderliche Antriebsleistung. Dies wiederum lässt eine Optimierung der Konstruktion dieser Bauteile zu.

Weitere Vorteile oder vorteilhafte Weiterbildungen der Erfindung ergeben sich aus den Unteransprüchen oder der nachfolgenden Beschreibung.

### Zeichnungen

Ausführungsbeispiele der Erfindung sind in der Zeichnung dargestellt und in der nachfolgenden Beschreibung näher beschrieben.
Die Figur 1 zeigt anhand eines Längsschnitts den Auslass einer bekannten Kolbenpumpe,
in Figur 2 ist ein Verschlussstopfen einer erfindungsgemäßen Kolbepumpe in der Draufsicht gezeigt.
Figur 3 zeigt ein zweites Ausführungsbeispiel der Erfindung,
Figur 4 ein drittes Ausführungsbeispiel und
Figur 5 ein viertes Ausführungsbeispiel, jeweils anhand einer Draufsicht auf die einer Laufbuchse der Kolbenpumpe zugewandte Stirnseite eines Verschlussstopfens.

Einander entsprechende Bauteile der verschiedenen Ausführungsbeispiele tragen in den verschiedenen Figuren einheitliche Bezugsziffern.

### Beschreibung der Ausführungsbeispiele

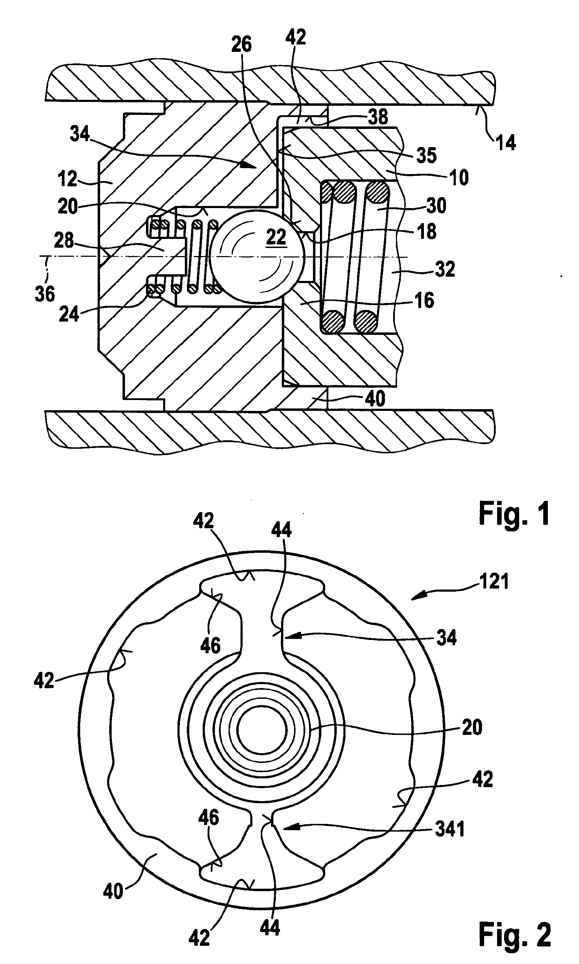

Figur 1 zeigt den Auslassbereich einer aus dem Stand der Technik (siehe beispielsweise DE 199 28 913 A1) bekannten Kolbenpumpe. Zu erkennen ist der Abschnitt einer Laufbuchse 10, sowie ein Verschlussstopfen 12, an dessen einen Stirnseite die Laufbuchse 10 anliegt. Der Verschlussstopfen 12 und die Laufbuchse 10 sind in einer angedeuteten Bohrung 14 eines nicht gezeigten Pumpengehäuses eingesetzt, wobei der Verschlussstopfen 12 diese Bohrung zur Umgebung hin abdichtet.

Die Laufbuchse 10 ist hohlzylindrisch ausgeführt und weist einen Laufbuchsboden 16 an ihrem dem Verschlussstopfen 10 zugewandten Ende auf. Zentrisch im Laufbuchsenboden 16 ist eine Durchgangsbohrung 18 angeordnet. Diese mündet in eine Ventilkammer 20 ein, die im Verschlusstopfen 12 ausgebildet ist. In dieser Ventilkammer 20 ist ein Ventilschließkörper 22 in Form einer Kugel beweglich aufgenommen. Der Ventilschließkörper 22 wird von einer Ventilfeder 24 gegen einen Ventilsitz 26 an der Stirnseite der Laufbuchse 10 gepresst. Die Ventilfeder 24 stützt sich dazu mit ihrem vom Ventilschließkörper 22 abgewandten Ende am Grund der Ventilkammer 20 ab. Zur Zentrierung der Ventilfeder 24 ist am Grund der Ventilkammer 20 ein vorstehender zapfenförmiger Vorsprung 28 angeformt. Eine Zusatzfunktion dieses Vorsprungs 28 besteht darin, einen Öffnungshub des Ventilschließkörpers 22 zu begrenzen.

Im Inneren der Laufbuchse 10 ist bekanntlich ein in Figur 1 nicht erkennbarer Kolben axial beweglich geführt. Dieser Kolben wird entgegen der Kraft einer ebenfalls im Inneren der Laufbuchse 10 angeordneten und am Laufbuchsenboden 16 abgestützten Kolbenrückstellfeder 30, zu einer hin- und hergehenden Hubbewegung angetrieben. Dabei verändert sich das Volumen einer zwischen dem Kolben und dem Ventilschließkörper 22 begrenzten Arbeitskammer 32.

Während eines Arbeitshubs des Kolbens steigt der Druck in dieser Arbeitskammer 32 an, bis eine von diesem Druck hervorgerufene, öffnend wirkende Druckkraft auf den Ventilschließkörper 22 größer ist, als die entgegen gerichtete, schließende wirkend Kraft der Ventilfeder 24. Sobald dies der Fall ist, hebt der Ventilschließkörper 22 vom Ventilsitz 26 ab und Druckmittel strömt aus der Arbeitskammer 32 in einen Abströmkanal 34 ab.

Der Abströmkanal 34 wird gebildet von einer Nut 35, die im Ausführungsbeispiel exemplarisch an der laufbuchsenseitigen Stirnseite des Verschlussstopfens 12 ausgebildet ist. Diese Nut 35 verläuft quer zu einer Längsachse 36 des Verschlussstopfens 12 und hat ihren Anfang in der Ventilkammer 20. Die Stirnseite des Verschlussstopfens 12 ist durch eine Flachsenkung 38 ausgebildet. Aufgrund dieser Flachsenkung 38 weist der Verschlussstopfen 12 einen umlaufenden Bund 40 auf, der das Ende der Laufbuchse 10 umfangsseitig umschließt. An der Innenseite dieses Bundes 40 ist eine parallel zur Längsachse 36 der Laufbuchse 12 ausgerichtete Ausnehmung 42 vorhanden. Diese mündet in die Nut 35 ein und bildet zusammen mit dieser Nut 35 den Abströmkanal 34. Der Abströmkanal 34 ist am Übergang von der Nut 35 zur Ausnehmung 42 einmal rechtwinklig umgelenkt.

Die Stirnseite des Verschlussstopfens 12 ist lediglich mit einer einzigen Nut 35 versehen. Deren Querschnitt ist geringer dimensioniert, als der Querschnitt der Durchgangsbohrung 18 des Laufbuchsenbodens 16. Diese Verhältnisse haben eine Drosselwirkung im abströmenden Druckmittel und damit einen beabsichtigten Druckanstieg in der Ventilkammer 20 zur Folge. Der Druckanstieg bestimmt die Strömungsverhältnisse am Ventilschließkörper 22 derart, dass dieser beim Abheben von seinem Ventilsitz 26 eine entgegen der Richtung der Nut 35 gerichtete Ausweichbewegung ausführt. Diese Ausweichbewegung erfolgt aufgrund der radialen Ausrichtung der Nut 35 stets in derselben Raumrichtung und definiert damit eine Vorzugslage für den Ventilschließkörper 22 im geöffneten Zustand. Aufgrund dieser Vorzugslage lassen sich die Druckverhältnisse einer Kolbenpumpe besser beherrschen. Ferner wirkt sich eine definierte Vorzugslage des Ventilschließkörpers 22 positiv auf das Geräuschverhalten der Kolbenpumpe aus.

Figur 2 zeigt einen erfindungsgemäß ausgebildeten Verschlussstopfen 121 in der Draufsicht. Dieser Verschlussstopfen 121 weist im Unterschied zum Verschlussstopfen 12 nach Figur 1 neben einem ersten Abströmkanal 34 einen zusätzlichen zweiten Abströmkanal 341 auf. Die Abströmkanäle 34 und 341 erstrecken sich zu beiden Seiten der Ventilkammer 20 und liegen sich fluchtend gegenüber. Beide Abläufe 34, 341 haben unterschiedlich große Strömungsquerschnitte, wobei der in Figur 2 nach oben weisende erste Abströmkanal 34 einen Querschnitt hat, der um ein Mehrfaches größer ist, als der Querschnitt des in Figur 2 nach unten weisenden zweiten Abströmkanals 341. Aufgrund des Gesetzes des geringsten Widerstands wird der im Querschnitt kleinere zweite Abströmkanal 341 erst durchströmt, wenn das Druckniveau im ersten Abströmkanal 34 angestiegen ist und dabei einen Schwellenwert überschritten hat. Dieser Schwellenwert ist durch das Verhältnis der Querschnittsflächen und durch die Wahl der Querschnittsform der Abströmkanäle 34, 341 konstruktiv bestimmbar. Unterhalb des Schwellenwertes fließt das Druckmittel nahezu ausschließlich zum ersten Abströmkanal 34. Damit bildet der zweite Abströmkanal 341 ein Mittel zur Begrenzung des Drucks, da es permanent hydraulisch durchlässig ist und die Durchströmung in Abhängigkeit des vorherrschenden Druckniveaus im Abströmkanal 34 erfolgt.

Ein Anstieg dieses Druckniveaus stellt sich beispielsweise ein, wenn aufgrund fallender Umgebungstemperaturen die Viskosität des Druckmittels und damit der Strömungswiderstand anwächst. Denkbar wäre ein Druckanstieg auch, wenn Schmutzpartikel im Inneren der Kolbenpumpe eine Durchströmung des ersten Abströmkanals 34 behindern. Mit einer Durchströmung beider Abströmkanäle 34, 341 wird das Druckniveau im Inneren der Kolbenpumpe und damit einhergehend die hydraulische Belastung der druckbeaufschlagten Bauteile begrenzt. Die beiden Abströmkanäle 34, 341 weisen auch deshalb unterschiedliche Querschnitte auf, damit der Ventilschließkörper 22 (Figur 1) unabhängig von den Druckverhältnissen beim Abheben vom Ventilsitz 26 (Figur 1) unverändert eine Vorzugslage einnimmt, wie dies in Zusammenhang mit der Erläuterung der Figur 1 bereits erläutert wurde.

Die beiden Abströmkanäle 34, 341 sind jeweils derart ausgebildet, dass ausgehend von der Ventilkammer 20 zunächst ein erster Drosselabschnitt 44 mit zueinander parallelen Nutflanken vorhanden ist. An diesen Drosselabschnitt 44 schließt sich nach radial außen jeweils ein, den Querschnitt der Abströmkanäle 34, 341 erweiternder zweiter Nutabschnitt 46 an. Die zweiten Nutabschnitte 46 gehen in Ausnehmungen 42 an der Innenseite des umlaufenden Bundes 40 des Verschlussstopfens 121 über. Dieser Bund 40 kann über seinen Umfang verteilt mehrere derartiger Ausnehmungen 42 aufweisen, um die Ausrichtung der Laufbuchse 10 gegenüber dem Verschlussstopfen 12 beim Zusammenbau der Kolbenpumpe zu vereinfachen. Die zwischen den Ausnehmungen 42 liegenden vorspringenden Abschnitte des Bundes 40 bewirken eine Zentrierung der beiden Bauteile zueinander.

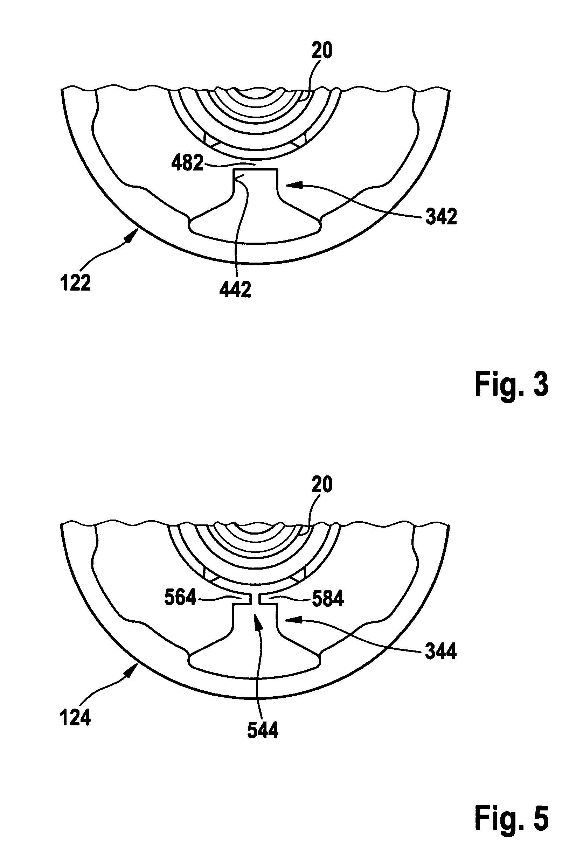

Figur 3 zeigt ein zweites Ausführungsbeispiel eines zweiten Abströmkanals 342 eines Verschlussstopfens 122 einer Kolbenpumpe. Bei dieser speziellen Ausgestaltung ist der Strömungsquerschnitt des zweiten Abströmkanals 342 durch einen querenden Steg 482 gesperrt. Vor dem Zusammenbau der Kolbenpumpe wird dieser Steg 482 mit einem geeigneten Werkzeug, beispielsweise einem Stempel oder einem Schleifwerkzeug umgeformt bzw. entfernt. Über eine derart erzeugte Ausnehmung kann der Strömungsquerschnitt des zweiten Abströmkanals 342 noch während der Herstellung der Kolbenpumpe in Form und Abmessungen an die späteren Einsatzbedingungen einer Kolbepumpe angepasst und damit die Pumpencharakteristik bestimmt werden.

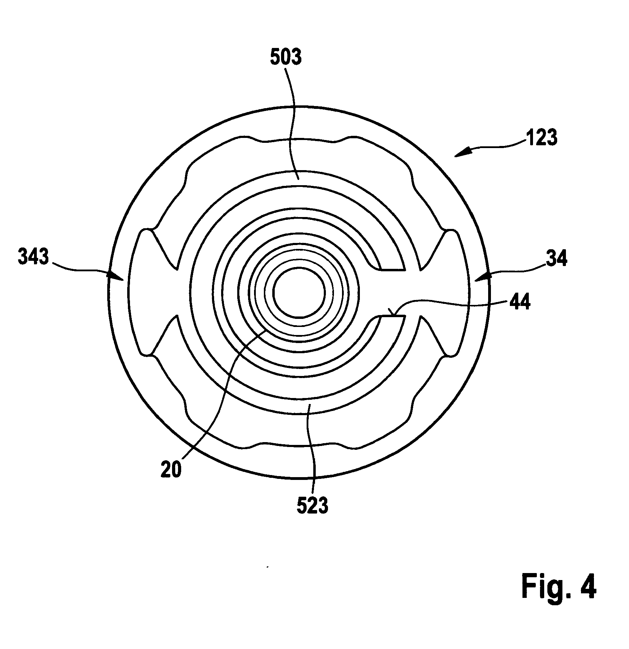

Figur 4 zeigt anhand eines dritten Ausführungsbeispiels eine weitere Möglichkeit zur Ausgestaltung des Abströmkanals 343 an einem Verschlussstopfen 123. Bei diesem Ausführungsbeispiel ist der zweite Abströmkanal 343 im Unterschied zu den Beispielen nach Figur 2 und 3 nicht über einen eigenen Drosselabschnitt an die Ventilkammer 20 angeschlossen, sondern über halbkreisförmig ausgebildete erste und zweite Bogenabschnitte 503 und 523 mit dem Drosselabschnitt 44 des ersten Abströmkanals 34 verbunden. Die beiden Bogenabschnitte 503 und 523 erstrecken sich mit radialem Abstand um die Ventilkammer 20 herum und bilden gemeinsam einen geschlossen Ring. Die Bogenabschnitte 503, 523 können zur Bestimmung der Pumpencharakteristik denselben Kanalquerschnitt aufweisen oder können auch mit unterschiedlichen Querschnitten ausgeführt sein. Auch lediglich das Vorsehen eines einzigen Bogenabschnitts kann eventuell ausreichen. Die Bogenabschnitte 503 und 523 lassen sich besonders einfach umformtechnisch herstellen.

Beim Ausführungsbeispiel nach Figur 5 ist im zweiten Abströmkanal 344 eine Berstdrossel 544 zwischen der Ventilkammer 20 und der Ausnehmung 42 im Bund 40 des Verschlussstopfens 124 vorgesehen. Diese Berstdrossel 544 wird gebildet durch zwei Flügel 564 und 584, die einstückig am Grund der Flachsenkung 38 dieses Verschlussstopfens 124 angeformt sind. Die Enden der beiden Flügel 564, 584 liegen einander gegenüber und bestimmen über ihren Abstand den Strömungsquerschnitt des zweiten Abströmkanals 344. Die Flügel 564, 584 der Berstdrossel 544 sind verhältnismäßig dünnwandig ausgeführt und plastisch verformbar, sobald das Druckniveau im Abströmkanal 344 einen Schwellenwert überschreitet. Mit einer Verformung der Flügel 564, 584 vergrößert sich der Strömungsquerschnitt des zweiten Abströmkanals 344. Auf diese Weise ist die Berstdrossel 544 nach Figur 5 in der Lage zu verhindern, dass den Strömungsquerschnitt versperrende Schmutzpartikel, im Inneren der Kolbenpumpe einen Druckanstieg verursachen, bei dem die druckbeaufschlagten Bauteile Schaden nehmen könnten.

Selbstverständlich sind Änderungen oder Ergänzungen an den beschriebenen Ausführungsbeispielen möglich, ohne vom Grundgedanken der Erfindung abzuweichen. Es sei diesbezüglich angemerkt, dass ein erfindungsgemäßer Gegenstand auch mehr als nur einen zweiten Abströmkanal aufweisen kann. Die Erfindung ist darüber hinaus nicht auf eine geradzahlige Anzahl vorhandener Abströmkanäle beschränkt. Die Abströmkanäle lassen sich wie beschrieben vollständig an der im Inneren der Kolbenpumpe liegenden Stirnseite des Verschlussstopfens ausbilden aber auf teilweise oder ausschließlich an der, dem Verschlussstopfen zugewandten Stirnseite des Laufbuchsenbodens.

## Patentansprüche

1. Hydraulische Kolbenpumpe, insbesondere für eine elektronisch schlupfregelbare Fahrzeugbremsanlage mit einem Pumpengehäuse, in dem ein Kolben beweglich geführt ist, mit einem im Pumpengehäuse ausgebildeten Druckmittel zuführenden Zuströmkanal, einem Druckmittel abführenden ersten Abströmkanal (34), wobei der erste Abströmkanal (34) eine die Strömung behindernde Drosselstelle (44) aufweist und mit Mitteln (341; 342; 343; 344) zur Begrenzung des Drucks im Inneren der Kolbenpumpe,
**dadurch gekennzeichnet,**
**dass** der erste Abströmkanal (34) und die Mittel (341; 342; 343; 344) permanent hydraulisch durchlässig und miteinander von abzuführendem Druckmittel durchströmt sind und dass die Durchströmung der Mittel (341; 342; 343; 344) gegenüber der Durchströmung des ersten Abströmkanals (34) in Abhängigkeit des Drucks im ersten Abströmkanal (34) reduziert ist.

2. Hydraulische Kolbenpumpe nach Anspruch 1, **dadurch gekennzeichnet, dass** die hydraulisch durchlässigen Mittel durch wenigstens einen zweiten Abströmkanal (341; 342; 343; 344) gebildet sind, dessen Strömungsquerschnitt kleiner ist als der Strömungsquerschnitt des ersten Abströmkanals (34).

3. Hydraulische Kolbenpumpe nach Anspruch 2, **dadurch gekennzeichnet, dass** der erste Abströmkanal (34) und der wenigstens eine zweite Abströmkanal (341; 342; 343; 344) hydraulisch miteinander gekoppelt sind.

4. Hydraulische Kolbenpumpe nach Anspruch 2 oder 3, **dadurch gekennzeichnet, dass** der wenigstens eine zweite Abströmkanal (341; 342; 343; 344) im Bereich der Drosselstelle (44) des ersten Abströmkanals (34) mit dem ersten Abströmkanal (34) hydraulisch gekoppelt ist.

5. Hydraulische Kolbenpumpe nach einem der Ansprüche 2 bis 4, **dadurch gekennzeichnet, dass** der Strömungsquerschnitt des wenigstens einen zweiten Abströmkanals (341; 342; 343; 344) begrenzt ist durch eine Berstdrossel (544) mit wenigstens einem druckabhängig verformbaren Flügel (564; 584).

6. Hydraulische Kolbenpumpe nach einem der Ansprüche 2 bis 4, **dadurch gekennzeichnet, dass** der wenigstens eine zweiten Abströmkanal (341; 342; 343; 344) einen querenden Steg (482) aufweist.

7. Hydraulische Kolbenpumpe nach einem der Ansprüche 2 bis 6 mit einem Verschlussstopfen, **dadurch gekennzeichnet, dass** der wenigstens eine zweite Abströmkanal (341; 342; 343; 344) wenigstens teilweise an einer der Kolbenpumpe zugewandten Stirnseite dieses Verschlussstopfens (12; 121; 122; 123; 124) ausgebildet ist.

8. Hydraulische Kolbenpumpe nach Anspruch 7, **dadurch gekennzeichnet, dass** der Verschlussstopfen (12; 121; 122; 123; 124) einen zylindrischen Querschnitt hat, wobei der erste Abströmkanal (34) und der wenigstens eine zweite Abströmkanal (341; 342; 343; 344) jeweils radial zu einer Längsachse (36) dieses Verschlussstopfens (12; 121; 122; 123; 124) verläuft.

9. Hydraulische Kolbenpumpe nach einem der Ansprüche 2 bis 8, **dadurch gekennzeichnet, dass** mehrere zweite Abströmkanäle (341; 342; 343; 344) vorgesehen sind.

## Claims

1. Hydraulic piston pump, in particular for an electronic controllable-slip vehicle brake system having a pump housing, in which a piston is guided movably, having an inflow channel which is formed in the pump housing and feeds in pressure medium, a first outflow channel (34) which discharges pressure medium, the first outflow channel (34) having a throttle point (44) which impedes the flow, and having means (341; 342; 343; 344) for restricting the pressure in the interior of the piston pump, **characterized in that** the first outflow channel (34) and the means (341; 342; 343; 344) are flowed through in a permanently hydraulically permeable manner and with one another by pressure medium to be discharged, and **in that** the throughflow of the means (341; 342; 343; 344) is reduced with respect to the throughflow of the first outflow channel (34) as a function of the pressure in the first outflow channel (34).

2. Hydraulic piston pump according to Claim 1, **characterized in that** the hydraulically permeable means are formed by at least one second outflow channel (341; 342; 343; 344), the flow cross section of which is smaller than the flow cross section of the first outflow channel (34).

3. Hydraulic piston pump according to Claim 2, **characterized in that** the first outflow channel (34) and the at least one second outflow channel (341; 342; 343; 344) are coupled hydraulically to one another.

4. Hydraulic piston pump according to Claim 2 or 3, **characterized in that** the at least one second outflow channel (341; 342; 343; 344) is coupled hydraulically to the first outflow channel (34) in the region of the throttle point (44) of the first outflow channel (34).

5. Hydraulic piston pump according to one of Claims 2 to 4, **characterized in that** the flow cross section of the at least one second outflow channel (341; 342; 343; 344) is restricted by a bursting throttle (544) having at least one vane (564; 584) which can be deformed as a function of pressure.

6. Hydraulic piston pump according to one of Claims 2 to 4, **characterized in that** the at least one second outflow channel (341; 342; 343; 344) has a crossing web (482).

7. Hydraulic piston pump according to one of Claims 2 to 6 having a closing plug, **characterized in that** the at least one second outflow channel (341; 342; 343; 344) is formed at least partially on an end side of the said closing plug (12; 121; 122; 123; 124), which end side faces the piston pump.

8. Hydraulic piston pump according to Claim 7, **characterized in that** the closing plug (12; 121; 122; 123; 124) has a cylindrical cross section, the first outflow channel (34) and the at least one second outflow channel (341; 342; 343; 344) extending in each case radially with respect to a longitudinal axis (36) of the said closing plug (12; 121; 122; 123; 124).

9. Hydraulic piston pump according to one of Claims 2 to 8, **characterized in that** a plurality of second outflow channels (341; 342; 343; 344) are provided.

## Revendications

1. Pompe à piston hydraulique, en particulier pour une installation de frein de véhicule à régulation de glissement électronique, comprenant un boîtier de pompe dans lequel est guidé de manière déplaçable un piston, un canal d'afflux amenant du fluide sous pression, réalisé dans le boîtier de pompe, un premier canal d'écoulement (34) évacuant du fluide sous pression, le premier canal d'écoulement (34) présentant un étranglement (44) perturbant l'écoulement, et des moyens (341 ; 342 ; 343 ; 344) pour limiter la pression à l'intérieur de la pompe à piston,
**caractérisée en ce que**
le premier canal d'écoulement (34) et les moyens (341 ; 342 ; 343 ; 344) permettent en permanence le passage de fluide hydraulique et sont parcourus l'un et l'autre par le fluide sous pression à évacuer, et **en ce que** l'écoulement à travers les moyens (341 ; 342 ; 343 ; 344) est réduit par rapport à l'écoulement à travers le premier canal d'écoulement (34) en fonction de la pression dans le premier canal d'écoulement (34).

2. Pompe à piston hydraulique selon la revendication 1, **caractérisée en ce que** les moyens permettant le passage de fluide hydraulique sont formés par au moins un deuxième canal d'écoulement (341 ; 342 ; 343 ; 344), dont la section transversale d'écoulement est inférieure à la section transversale d'écoulement du premier canal d'écoulement (34).

3. Pompe à piston hydraulique selon la revendication 2, **caractérisée en ce que** le premier canal d'écoulement (34) et l'au moins un deuxième canal d'écoulement (341 ; 342 ; 343 ; 344) sont accouplés hydrauliquement l'un à l'autre.

4. Pompe à piston hydraulique selon la revendication 2 ou 3, **caractérisée en ce que** l'au moins un deuxième canal d'écoulement (341 ; 342 ; 343 ; 344) est accouplé hydrauliquement dans la région de l'étranglement (44) du premier canal d'écoulement (34) au premier canal d'écoulement (34).

5. Pompe à piston hydraulique selon l'une quelconque des revendications 2 à 4, **caractérisée en ce que** la section transversale d'écoulement de l'au moins un deuxième canal d'écoulement (341 ; 342 ; 343 ; 344) est limitée par un étranglement d'éclatement (544) avec au moins une ailette (564 ; 584) déformable en fonction de la pression.

6. Pompe à piston hydraulique selon l'une quelconque des revendications 2 à 4, **caractérisée en ce que** l'au moins un deuxième canal d'écoulement (341 ; 342 ; 343 ; 344) présente une nervure transversale (482).

7. Pompe à piston hydraulique selon l'une quelconque des revendications 2 à 6, comprenant un bouchon de fermeture, **caractérisée en ce que** l'au moins un deuxième canal d'écoulement (341 ; 342 ; 343 ; 344) est réalisé au moins en partie sur un côté frontal tourné vers la pompe à piston de ce bouchon de fermeture (12 ; 121 ; 122 ; 123 ; 124).

8. Pompe à piston hydraulique selon la revendication 7, **caractérisée en ce que** le bouchon de fermeture (12 ; 121 ; 122 ; 123 ; 124) a une section transversale cylindrique, le premier canal d'écoulement (34) et l'au moins un deuxième canal d'écoulement (341 ; 342 ; 343 ; 344) s'étendant à chaque fois radialement par rapport à un axe longitudinal (36) de ce bouchon de fermeture (12 ; 121 ; 122 ; 123 ; 124).

9. Pompe à piston hydraulique selon l'une quelconque des revendications 2 à 8, **caractérisée en ce que** plusieurs deuxièmes canaux d'écoulement (341 ; 342 ; 343 ; 344) sont prévus.
